Europäisches Patentamt

European Patent Office

Office européen des brevets

(19)

(11) EP 0 539 264 B1

(12) FASCICULE DE BREVET EUROPEEN

(45) Date de publication et mention
de la délivrance du brevet:
**05.06.1996 Bulletin 1996/23**

(51) Int Cl.$^6$: **G01D 5/26**, G01S 5/16,
G01B 11/00

(21) Numéro de dépôt: **92402772.5**

(22) Date de dépôt: **09.10.1992**

(54) **Procédé et dispositif de détermination de l'orientation d'un solide**

Verfahren und Vorrichtung zum Determinieren der Orientation eines Objektes

Procedure and device to determine the orientation of an object

(84) Etats contractants désignés:
**BE DE FR GB IT NL SE**

(30) Priorité: **25.10.1991 FR 9113219**

(43) Date de publication de la demande:
**28.04.1993 Bulletin 1993/17**

(73) Titulaire: **SEXTANT AVIONIQUE**
**F-92360 Meudon-la-Forêt (FR)**

(72) Inventeurs:
• **Lach, Patrick**
**F-92045 Paris La Défense (FR)**
• **Migozzi, Jean-Blaise**
**F-92045 Paris La Défense (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
FR-A- 2 551 860        GB-A- 2 157 426
US-A- 4 396 945        US-A- 4 639 878
US-A- 5 059 789

## Description

La présente invention concerne un procédé et un dispositif de détermination de l'orientation d'un solide quelconque dans un espace donné.

De nombreux systèmes nécessitent de connaître et de suivre l'évolution, en quasi temps réel, des paramètres d'orientation d'un solide dans un référentiel donné. C'est notamment le cas des systèmes viseurs montés sur le casque même des pilotes d'avions ou d'hélicoptères, et permettant aux pilotes de voir l'image d'un réticule projeté à l'infini en superposition avec les scènes extérieures. Les images présentées au pilote doivent impérativement rester en correspondance avec le référentiel du porteur (avion, hélicoptère...) quels que soient les mouvements du casque par rapport à ce dernier, de façon à désigner, par exemple, une cible visée à un système d'arme.

Il est connu d'utiliser un détecteur électromagnétique de position et d'orientation, comportant d'une part, un émetteur fixe dans le référentiel donné, composé de trois bobines excitées alternativement par un générateur, et d'autre part, un capteur fixé au solide et composé également de trois bobines, de telle sorte qu'à chaque position du solide correspondent neuf signaux induits par les bobines de l'émetteur, ces neuf signaux permettant le calcul de la position et de l'orientation du solide. Cependant, les champs électromagnétiques créés ou induits peuvent être notablement perturbés du fait de tous les éléments métalliques de l'environnement, et un tel détecteur nécessite soit de disposer de moyens annexes pour fournir un signal de référence en vue d'effectuer une correction (brevet français n° 2.655.415), soit de réaliser, dans une phase préalable, une modélisation prenant en compte les perturbations.

Il existe également des systèmes électro-optiques consistant à disposer sur le solide un certain nombre de marques, ponctuelles ou surfaciques, émissives ou non, et dont la position dans un repère $R_s$ lié au solide est bien connue, puis de repérer, par des capteurs optiques fixes dans le repère $R_o$ de l'espace de mesure, la position d'un certain nombre de droites ou courbes reliant au moins deux marques distinctes du solide. On peut montrer que l'erreur de mesure des paramètres d'orientation du solide est d'une part, proportionnelle à l'incertitude des mesures de position des marques dans le repère $R_o$, et d'autre part, inversement proportionnelle à la distance séparant les marques. De tels systèmes sont donc plutôt adaptés à des solides de grande taille pour lesquels les marques peuvent être très espacées, mais les mesures nécessitent toujours de calculer la position d'au moins deux points du solide.

On connaît par ailleurs du document GB-A-2.157.426 un procédé optique de détermination des paramètres d'orientation d'un repère $R_s$ lié à un premier solide par rapport à un repère $R_o$ lié à un second solide dit de référence, comportant une phase de projection, à partir du premier solide, d'un faisceau de rayons lumineux, et une phase de réception d'un faisceau de rayons lumineux sur un capteur élémentaire du second solide.

La présente invention a pour but de pallier les inconvénients ou limitations précédents en proposant un procédé optique de détermination de l'orientation d'un solide quelconque par rapport à un référentiel $R_o$, indépendam ment des positions de ce solide dans $R_o$.

Plus précisément, l'invention concerne un procédé optique de détermination des paramètres d'orientation d'un repère $R_s$ lié à un premier solide par rapport à un repère $R_o$ lié à un second solide dit de référence, comportant une phase de projection, à partir du premier solide, d'un faisceau de rayons lumineux, et une phase de réception d'un faisceau de rayons lumineux sur un capteur élémentaire du second solide, et présentant les caractéristiques définies dans la revendication 1.

Un autre objet de l'invention est un dispositif permettant la mise en oeuvre du procédé, tel que défini dans les revendications 2 à 9.

L'invention, ainsi que ses avantages, sera mieux comprise au vu de la description suivante, en référence aux figures annexées :

- La figure 1 (1a et 1b) illustre le procédé de détermination des paramètres d'orientation selon l'invention dans un espace de mesure à deux dimensions ;
- La figure 2 est un dispositif permettant la mise en oeuvre du procédé selon l'invention, étendu au cas d'un espace de mesure tridimensionnel.

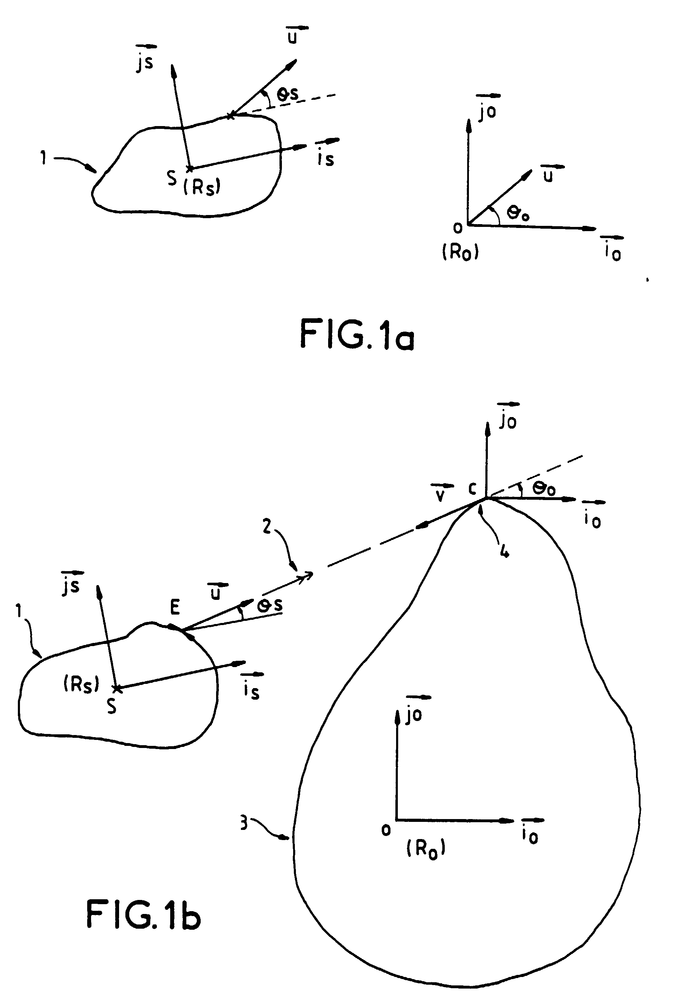

Plaçons-nous dans l'hypothèse la plus élémentaire de la figure 1a où l'espace de mesure est un espace à deux dimensions de repère $R_o$ et de vecteurs de base $(i_o, j_o)$. Soit un solide symbolisé par un plan 1, coplanaire à l'espace de mesure et repéré par $R_s$ et $(i_s, j_s)$. L'orientation du solide 1 dans cet espace de mesure est parfaitement déterminée dès que l'on peut exprimer dans $R_o$ un vecteur connu dans $R_s$.

Supposons un vecteur $\vec{u}$ parfaitement connu dans $R_s$, par exemple par l'angle $\theta_s$ qu'il fait avec $i_s$. Le problème posé sera entièrement résolu si l'on peut, d'une part, exprimer $\vec{u}$ dans le repère $R_o$, par exemple par l'angle $\theta_o$, et d'autre part, transmettre au repère $R_o$ une information permettant d'identifier dans $R_s$, par exemple l'angle $\theta_s$. La connaissance de $\theta_s$ et de $\theta_o$ dans le même espace de mesure permet ensuite d'extraire l'angle $(\theta_s-\theta_o)$ entre les vecteurs $i_s$ et $i_o$ caractérisant ainsi l'orientation de $R_s$ par rapport à $R_o$.

Le procédé de mesure selon l'invention repose sur le principe précédent, comme l'illustre la figure 1b :

A partir d'un premier solide symbolisé par le plan 1 de repère $R_s$ $(S, i_s, j_s)$, un faisceau de rayons lumineux sensiblement parallèles entre eux est projeté dans la direction $\vec{u}$, identifiable dans $R_s$, par exemple par l'angle $\theta_s$. Selon une caractéristique essentielle de l'invention, le faisceau contient une information relative au positionnement de $\vec{u}$ dans $R_s$, par exemple $\theta_s$. Par ailleurs, dans l'espace de mesure à deux dimensions matérialisé par un second solide 3 coplanaire du premier solide 1, de repère de référence $R_o$ (O, $\vec{i}_o$, $\vec{j}_o$), un capteur élémentaire optique 4 placé en un point C déterminé dans $R_o$, capte les rayons provenant d'une direction $\vec{v}$ parfaitement connue dans $R_o$, par exemple par l'angle $\theta_o$. Lorsqu'il y a coïncidence entre les directions $\vec{u}$ et $\vec{v}$, on obtient immédiatement, sans calculs, l'expression de $\vec{u}$ dans $R_o$. Selon une autre caractéristique essentielle de l'invention, le capteur 4 dispose de moyens de lecture (non représentés) capables de lire l'information contenue dans les faisceaux de rayons captés. La connaissance de $\vec{u}$ à la fois dans $R_o$ et dans $R_s$ permet alors d'extraire par le calcul les paramètres d'orientation de $R_s$ par rapport à $R_o$, lesquels peuvent se réduire, dans ce cas précis, à un angle.

Pour pouvoir repérer et suivre un solide, quelles que soient son orientation et sa position dans un certain champ de mesure, il est préférable de projeter, à partir du premier solide 1, une pluralité de faisceaux de rayons, chaque rayon d'un faisceau étant sensiblement parallèle à une direction $\vec{u}_i$, chaque faisceau comportant une information d'identification de la direction $\vec{u}_i$ par rapport au repère $R_s$, et/ou d'équiper le second solide 3 de plusieurs capteurs élémentaires $C_j$ capables chacun de capter un faisceau provenant d'une direction unique $\vec{V}_j$.

Le calcul d'extraction des paramètres d'orientation du repère $R_s$ par rapport à $R_o$ dépend du nombre de directions captées, ce nombre étant inférieur ou égal au nombre de capteurs élémentaires $C_j$ : Dans le cas de la figure 1b, nous avons vu qu'une seule direction captée permet d'extraire l'angle entre les vecteurs $\vec{i}_s$ et $\vec{i}_o$, paramètre qui suffit à lui seul pour caractériser l'orientation de deux repères coplanaires.

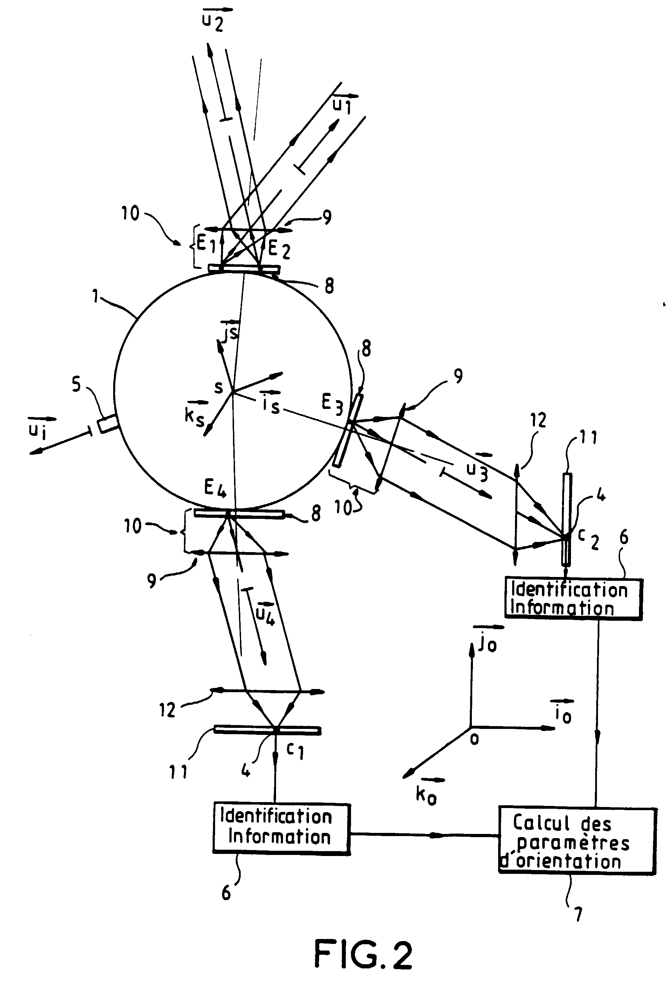

La figure 2 illustre une extension de l'invention à un espace de mesure tridimensionnel de repère de référence $R_o$ (O, $\vec{i}_o$, $\vec{j}_o$, $\vec{k}_o$), cet espace étant par exemple matérialisé par une cabine de pilotage d'un avion ou d'un hélicoptère. Dans cet espace de mesure est disposé un ou plusieurs capteurs élémentaires 4, notés $C_j$, fixes par rapport à $R_o$. Chacun de ces capteurs $C_j$ est capable de capter tout ou partie des rayons d'un faisceau lumineux, ces rayons étant sensiblement parallèles à une direction $\vec{V}_j$ parfaitement identifiable dans le repère $R_o$. Par ailleurs, un solide 1, mobile dans l'espace de mesure est lié à un repère $R_s$ (S, $\vec{i}_s$, $\vec{j}_s$, $\vec{k}_s$). Ce solide peut, par exemple, être le casque viseur du pilote. Conformément à l'invention, le solide 1 est muni, à sa périphérie, d'un ou plusieurs dispositifs monofaisceaux 5, chacun engendrant un faisceau de rayons lumineux sensiblement parallèles à une direction $\vec{u}_i$ parfaitement identifiable dans le repère $R_s$. Comme le montre la figure 2, un capteur élémentaire $C_j$ peut capter tout ou partie d'un faisceau de rayons provenant d'une direction $\vec{u}_i$ avec i différent de j. Selon une caractéristique essentielle de l'invention, chaque faisceau de rayons lumineux engendré par un dispositif monofaisceau 5 contient une information identifiant la direction $\vec{u}_i$ par rapport au repère $R_s$. Chaque capteur élémentaire 4 dispose également de moyens de lecture 6 de l'information contenue dans le faisceau de rayons capté partiellement ou totalement. Un certain nombre d'informations est alors transmis à un dispositif 7 d'extraction des paramètres d'orientation du solide 1, c'est-à-dire du repère $R_s$, par rapport à l'espace de mesure, c'est-à-dire au repère $R_o$. Pratiquement, les dispositifs monofaisceaux 5 sont des systèmes optiques qui forment une image à l'infini en projetant un faisceau de rayons lumineux sensiblement parallèles à une direction donnée. L'information sur cette direction correspond physiquement à la modulation en intensité des différents rayons d'un même faisceau.

La figure 2 montre une réalisation préférentielle qui consiste à regrouper les dispositifs monofaisceaux 5 en une pluralité de dispositifs multifaisceaux 10 composés par exemple d'une mire 8 placée dans le plan focal d'un objectif de collimation 9, de façon à ce que l'image de la mire soit projetée à l'infini. Chaque point $E_i$ d'une mire 8 correspond à une direction fixe du repère $R_s$, et engendre, par le principe de collimation, un faisceau de rayons lumineux sensiblement parallèles à une direction $\vec{u}_i$. De plus, un symbole est inscrit dans le voisinage de chaque point $E_i$ de manière à pouvoir l'identifier. La mire 8, qui est soit transmissive, soit réflexive, est éclairée en conséquence par toute source lumineuse (non représentée) qui convient. De manière équivalente au regroupement précédent, les capteurs élémentaires $C_j$ peuvent être rassemblés sur des capteurs 11, par exemple du type CCD associés à une lentille convergente 12.

Lorsqu'un capteur 11 intercepte un faisceau de rayons lumineux sensiblement parallèles à une direction $\vec{u}_i$, il se forme sur ce, capteur l'image du point $E_i$ et de son symbole associé. Au point $C_j$ du capteur 11 sur lequel se focalise le point $E_i$, correspond une direction $\vec{V}_j$, bien connue dans $R_o$, et qui coïncide avec la direction $\vec{u}_i$. Il est alors possible d'exprimer $\vec{u}_i$ dans $R_o$. Le dispositif 7 analyse d'autre part le contenu de l'image fournie par le capteur et identifie le symbole ou information qui apparaît au voisinage du point capté. Ce symbole permet d'identifier le point $E_i$ et d'exprimer $\vec{u}_i$ dans le repère $R_s$. A partir d'un certain nombre de mesures, conduisant chacune à deux expressions conjointes d'un même vecteur dans $R_o$ et $R_s$, il est facile de calculer l'orientation de $R_s$ par rapport à $R_o$. Dans le cas le plus simple où l'on détecte trois vecteurs $\vec{u}_1, \vec{u}_2, \vec{u}_3$ linéairement indépendants le calcul consiste à résoudre un système de neuf équations linéaires à neuf inconnues.

Dans un autre mode de réalisation possible, l'ensemble constitué par une mire 8 et son objectif de collimation 9 associé peut être remplacé par un hologramme obtenu en enregistrant l'image rejetée à l'infini de la mire. En rééclairant convenablement l'hologramme disposé en lieu et place de l'ensemble précédent, il restitue l'image enregistrée avec les informations codées. L'intérêt de l'hologramme réside bien entendu dans le gain de place obtenu par rapport à l'ensemble (mire, objectif de collimation).

L'invention telle qu'elle a été décrite présente le grand intérêt, par rapport aux systèmes de l'art antérieur, d'obtenir une très bonne précision grâce à l'indépendance de fonctionnement vis-à-vis des positions successives du solide 1. En outre, l'accès direct à l'information contenue dans les faisceaux émis permet une grande simplicité des calculs.

## Revendications

1. Procédé optique de détermination des paramètres d'orientation d'un repère $R_s$ lié à un premier solide (1) par rapport à un repère $R_o$ lié à un second solide dit de référence, comportant une phase de projection, à partir du premier solide, d'un faisceau de rayons lumineux, et une phase de réception d'un faisceau de rayons lumineux sur un capteur élémentaire du second solide, le procédé étant caractérisé en ce que la phase de projection consiste à projeter au moins un faisceau de rayons lumineux sensiblement parallèles à une direction $\vec{u}$ connue dans le repère $R_s$, le faisceau de rayons lumineux contenant une information identifiant ladite direction par rapport au repère $R_s$, en ce que la phase de réception consiste à recevoir au moins partiellement un faisceau de rayons lumineux sur au moins un capteur élémentaire du second solide, le capteur étant capable de capter les faisceaux lumineux provenant sensiblement d'une seule direction $\vec{v}$ connue du repère $R_o$ et en ce que le procédé consiste en outre à lire l'information contenue dans le faisceau reçu par le capteur élémentaire et à extraire par le calcul, à partir de la connaissance du capteur élémentaire ayant reçu le faisceau de rayons lumineux et de l'information lue, les paramètres d'orientation du repère $R_s$ par rapport au repère $R_o$, indépendamment de la position du repère $R_s$ dans le repère $R_o$.

2. Dispositif optique de détermination des paramètres d'orientation d'un repère $R_s$ lié à un premier solide (1) par rapport à un repère $R_o$ lié à un second solide dit de référence, comportant un dispositif monofaisceau (5), situé à la périphérie du premier solide (1), et engendrant un faisceau de rayons lumineux, et un capteur élémentaire (4), fixe par rapport à $R_o$, et capable de capter un faisceau lumineux, le dispositif étant caractérisé en ce que le dispositif monofaisceau (5) engendre un faisceau de rayons lumineux sensiblement parallèles à une direction $\vec{u}_i$ connue dans le repère $R_s$, le faisceau de rayons lumineux contenant une information identifiant la direction $\vec{u}_i$ par rapport au repère $R_s$, en ce que le capteur élémentaire (4) est capable de capter tout ou partie d'un faisceau lumineux provenant sensiblement d'une direction $\vec{v}_j$ connue dans $R_o$, et en ce que le dispositif comporte en outre des moyens de lecture (6) de l'information contenue dans le faisceau de rayons capté et un dispositif (7) d'extraction de paramètres d'orientation du repère $R_s$ par rapport au repère $R_o$, indépendamment de la position du repère $R_s$ dans le repère $R_o$.

3. Dispositif optique selon la revendication 2, caractérisé en ce que le dispositif monofaisceau (5) est un système optique formant une image à l'infini.

4. Dispositif optique selon l'une quelconque des revendications 2 ou 3, caractérisé en ce que plusieurs dispositifs monofaisceaux (5) sont regroupés en une pluralité de dispositifs multifaisceaux (10) composés d'une mire (8) placée dans le plan focal d'un objectif de collimation (9).

5. Dispositif optique selon la revendication 4, caractérisé en ce que la mire (8) est constituée d'une pluralité de points $E_i$ correspondant à une direction fixe du repère $R_s$, l'information étant inscrite dans le voisinage de chaque point $E_i$ de manière à pouvoir l'identifier.

6. Dispositif optique selon la revendication 4, caractérisé en ce que la mire (8) est transmissive.

7. Dispositif optique selon la revendication 4, caractérisé en ce que la mire (8) est réflexive.

8. Dispositif optique selon la revendication 4, caractérisé en ce que les dispositifs multifaisceaux sont constitués par un hologramme obtenu en enregistrant l'image rejetée à l'infini de la mire (8).

9. Dispositif optique selon l'une quelconque des revendications 2 à 8, caractérisé en ce que plusieurs capteurs élémentaires (4) sont regroupés en une pluralité de capteurs (11), chaque capteur (11) étant associé à une lentille convergente (12).

## Patentansprüche

1. Optisches Verfahren zur Bestimmung der Richtungsparameter eines mit einem ersten Körper (1) verknüpften Koordinatensystems $R_s$ bezüglich eines mit einem zweiten Körper, Bezugskörper genannt, verknüpften Koordinatensystems $R_o$, wobei das Verfahren eine Phase der Projektion eines Bündels von Lichtstrahlen ausgehend von dem ersten Körper und eine Phase des Empfangs eines Bündels von Lichtstrahlen durch eine Elementarsonde des zweiten Körpers enthält, dadurch gekennzeichnet, daß die Phase der Projektion darin besteht, mindestens ein Bündel von im wesentlichen zu einer im Koordinatensystem $R_s$ bekannten Richtung $\vec{u}$ parallelen Lichtstrahlen zu projizieren, wobei das Bündel von Lichtstrahlen eine Information zur Identifizierung der Richtung bezüglich des Koordinatensystems $R_s$ enthält, daß die Phase des Empfangs darin besteht, mindestens teilweise ein Bündel von Lichtstrahlen in mindestens einer Elementarsonde des zweiten Körpers zu empfangen, wobei die Sonde die von im wesentlichen einer einzigen, im Koordinatensystem $R_o$ bekannten Richtung $\vec{v}$ kommenden Lichtstrahlenbündel erfassen kann, und daß das Verfahren weiter darin besteht, die in dem von der Elementarsonde empfangenen Bündel enthaltene Information zu lesen und durch Berechnung ausgehend von der Kenntnis der Elementarsonde, die das Bündel von Lichtstrahlen empfangen hat, und von der gelesenen Information die Richtungsparameter des Koordinatensystems $R_s$ bezüglich des Systems $R_o$ unabhängig von der Lage des Koordinatensystems $R_s$ im System $R_o$ zu berechnen.

2. Optisches Verfahren zur Bestimmung der Richtungsparameter eines Koordinatensystems $R_s$, das mit einem ersten Körper (1) verknüpft ist, bezüglich eines Koordinatensystems $R_o$, das mit einem zweiten Körper, Bezugskörper genannt, verknüpft ist, wobei die Vorrichtung eine Vorrichtung (5) zur Erzeugung eines Bündels von Lichtstrahlen, die auf der Peripherie des ersten Körpers (1) sitzt, sowie eine Elementarsonde (4) aufweist, die bezüglich des Systems $R_o$ fixiert ist und einen Lichtstrahl auffangen kann, dadurch gekennzeichnet, daß die Vorrichtung (5) ein Bündel von im wesentlichen zu einer im Koordinatensystem $R_s$ definierten Richtung $\vec{u_i}$ parallelen Lichtstrahlen erzeugt, wobei das Bündel von Lichtstrahlen eine die Richtung $\vec{u_i}$ bezüglich des Koordinatensystems $R_s$ identifizierende Information enthält, daß die Elementarsonde (4) mindestens einen Teil eines Lichtbündels auffangen kann, das im wesentlichen aus einer im Koordinatensystem $R_o$ definierten Richtung $\vec{V_j}$ kommt, und daß die Vorrichtung weiter Mittel (6) zum Lesen der in dem Strahlenbündel enthaltenen Information sowie eine Vorrichtung (7) zur Berechnung von Richtungsparametern des Koordinatensystems $R_s$ bezüglich des Koordinatensystems $R_o$ unabhängig von der Lage des Koordinatensystems $R_s$ im System $R_o$ enthält.

3. Optische Vorrichtung nach Anspruch 2, dadurch gekennzeichnet, daß die Vorrichtung (5) zur Erzeugung eines Lichtbündels ein optisches System ist, das ein Bild im Unendlichen erzeugt.

4. Optische Vorrichtung nach einem beliebigen der Ansprüche 2 oder 3, dadurch gekennzeichnet, daß mehrere Vorrichtungen (5) zur Erzeugung eines Strahlenbündels in einer Mehrzahl von Richtungen (10) zusammengefaßt sind, die aus einem in der Brennebene eines Kollimationsobjektivs (9) liegenden synthetischen Bild (8) bestehen.

5. Optische Vorrichtung nach Anspruch 4, dadurch gekennzeichnet, daß das synthetische Bild (8) aus einer Vielzahl von Punkten $E_i$ besteht, die einer festen Richtung im System $R_s$ entsprechen, während die Information in der Nähe jedes Punkts $E_i$ eingetragen ist, so daß er identifiziert werden kann.

6. Optische Vorrichtung nach Anspruch 4, dadurch gekennzeichnet, daß das synthetische Bild (8) transparent ist.

7. Optische Vorrichtung nach Anspruch 4, dadurch gekennzeichnet, daß das synthetische Bild (8) reflektierend ist.

8. Optische Vorrichtung nach Anspruch 4, dadurch gekennzeichnet, daß die Vorrichtungen zur Erzeugung von Strahlen aus einem Hologramm bestehen, das durch Registrierung eines ins Unendliche projizierten synthetischen Bilds (8) gebildet wird.

9. Optische Vorrichtung nach einem beliebigen der Ansprüche 2 bis 8, dadurch gekennzeichnet, daß mehrere Elementarsonden (4) in einer Mehrzahl von Sondenleisten (11) zusammengefaßt sind, wobei jeder Sondenleiste (11) eine Sammellinse (12) zugeordnet ist.

## Claims

1. Optical method for determining the orientation parameters of a coordinate system $R_s$ connected with a first solid (1) with respect to a coordinate system $R_o$ connected with a second, so-called reference, solid, including a phase of projecting a beam of light rays from the first solid, and a phase of receiving a beam of light rays on an elementary sensor on the second solid, the method being characterized in that the projection phase consists in projecting at least one beam of light rays that are substantially parallel to a known direction $\vec{u}$ in the coordinate system $R_s$, the beam of light rays containing an information item identifying the said direction with respect to the coordinate system $R_s$, and in that the reception phase consists in receiving at least partially a beam of light rays on at least one elementary sensor on the second solid, the sensor being capable of picking up the light beams originating substantially from a single direction $\vec{v}$ known in the coordinate system $R_o$, and in that the method furthermore consists in reading the information contained in the beam received by the elementary sensor and in extracting by calculation, based on knowledge of the elementary sensor that has received the beam of light rays and the information read, the orientation parameters of the coordinate system $R_s$ with respect to the coordinate system $R_o$, independently of the position of the coordinate system $R_s$ in the coordinate system $R_o$.

2. Optical device for determining the orientation parameters of a coordinate system $R_s$ connected with the first solid (1) with respect to a coordinate system $R_o$ connected with a second, so-called reference, solid, including a single-beam device (5), located at the periphery of the first solid (1) and generating a beam of light rays, and an elementary sensor (4), fixed with respect to $R_o$ and capable of picking up a light beam, the device being characterized in that the single-beam device (5) generates a beam of light rays which are substantially parallel to a direction $\vec{u}_i$ known in the coordinate system $R_s$, the beam of light rays containing an information item identifying the direction $\vec{u}_i$ with respect to the coordinate system $R_s$ in that the elementary sensor (4) is capable of picking up all or part of a light beam originating substantially from a direction $\vec{V}_j$ known in $R_o$, and in that the device furthermore includes means (6) for reading the information contained in the beam of rays which is picked up and a device (7) for extracting orientation parameters of the coordinate system $R_s$ with respect to the coordinate system $R_o$, independently of the position of the coordinate system $R_s$ in the coordinate system $R_o$.

3. Optical device according to Claim 2, characterized in that the single-beam device (5) is an optical device forming an image at infinity.

4. Optical device according to either one of Claims 2 or 3, characterized in that a plurality of single-beam devices (5) are grouped into a plurality of multi-beam devices (10) which are composed of a sighting pattern (8) placed in the focal plane of a collimating objective lens (9).

5. Optical device according to Claim 4, characterized in that the sighting pattern (8) consists of a plurality of points $E_i$ corresponding to a fixed direction in the coordinate system $R_s$, the information being inscribed in the vicinity of each point $E_i$ so as to be able to identify it.

6. Optical device according to Claim 4, characterized in that the sighting pattern (8) is transmissive.

7. Optical device according to Claim 4, characterized in that the sighting pattern (8) is reflective.

8. Optical device according to Claim 4, characterized in that the multi-beam devices consist of a hologram obtained by recording the image produced at infinity of the sighting pattern (8).

9. Optical device according to any one of Claims 2 to 8, characterized in that a plurality of elementary sensors (4) are grouped into a plurality of sensors (11), each sensor (11) being associated with a converging objective lens (12).

FIG.1a

FIG.1b

# FIG.2